# EUROPEAN PATENT SPECIFICATION

(11) **EP 4 306 455 B1**
(45) Date of publication and mention of the grant of the patent: **24.06.2026**
(21) Application number: 23185204.7
(22) Date of filing: 13.07.2023
(51) Int. Cl.: B65G 21/20, B65G 47/68, B65G 47/76

(54) **CONVEYANCE SYSTEM FOR MERGING**
FÖRDERSYSTEM ZUM ZUSAMMENFÜHREN
SYSTÈME DE TRANSPORT POUR FUSIONNER

(30) Priority: 15.07.2022 JP 2022114187
(43) Date of publication of application: 17.01.2024
(73) Proprietor: Pacraft Co., Ltd., Tokyo 108-0014 (JP)
(72) Inventor: Nakagawa, Koichi, Iwakuni-shi, Yamaguchi-ken (JP)
(74) Representative: Grünecker Patent- und Rechtsanwälte PartG mbB

(56) References cited:
- DE-A1- 102014 106 400
- JP-A- 2005 231 779
- US-A1- 2010 155 194
- US-A1- 2020 198 818
- US-B2- 9 457 961
- US-B2- 9 643 794

## Description

### TECHNICAL FIELD

The present disclosure relates to a conveyance system.

### BACKGROUND ART

Conveyance systems are known in which two conveyance paths for transporting articles merge in the middle of a conveyance route, so that a plurality of articles are finally conveyed in a single conveyance path (see Japanese patent application publication Nos. 2001-315955 and 2005-231779). A conveyance system according to the preamble of claim 1 is disclosed in JP 2005 231779 A.

### SUMMARY OF THE INVENTION

In order to merge a secondary conveyance path into a main conveyance path in such a manner that articles conveyed in the main and secondary conveyance paths are conveyed in the main conveyance path, a conveyance system could be conceived in which articles are dropped from the end portion of the secondary conveyance path located above the main conveyance path, towards the main conveyance path so as to transfer the articles from the secondary conveyance path the main conveyance path.

In such a conveyance system, it may be required that a section of the secondary conveyance path upstream of the end of the secondary conveyance path have an upward slope in order to locate the end portion of the secondary conveyance path above the main conveyance path. In order to secure such an upward slope, the secondary conveyance path may be lengthened as a whole, and it may be required to reserve a vast installation space for the secondary conveyance path. There is also a concern that as articles drop from the secondary conveyance path, foreign matters, such as dust, may also drop from the secondary conveyance path and adhere to the main conveyance path and articles on the main conveyance path.

Another conveyance system could be conceived in which the main conveyance path and the secondary conveyance path are arranged horizontally side by side at the same height, and articles are transferred from the secondary conveyance path to the main conveyance path by causing articles being conveyed in the secondary conveyance path to move in a horizontal direction (in particular, in a conveyance path width direction perpendicular to the conveyance direction). In this conveyance system, while an article is being conveyed in the secondary conveyance path, one side edge portion (e.g., a side seal part) of the article is pushed towards the main conveyance path by a guide plate standing in the vertical direction in such a manner that the article is transferred from the secondary conveyance path to the main conveyance path.

In such a conveyance system, there is a concern that an article guided by a guide plate may enter a gap between the guide plate extending in a vertical direction and the secondary conveyance path extending in a horizontal direction. In such a case, articles may not be transferred in a proper posture from the secondary conveyance path to the main conveyance path, articles may suffer scratches or other damages, or an article that is trapped between the guide plate and the secondary conveyance path may get stuck and block subsequent articles.

The present disclosure has been made in view of the above-mentioned circumstances and has an object to provide a conveyance system that is advantageous for properly transferring an article from the secondary conveyance path to the main conveyance path.

One aspect of the present disclosure is directed to a conveyance system comprising: a main conveyance unit that conveys an article in a main conveyance path including a confluence section; a secondary conveyance unit that conveys an article in a secondary conveyance path; and a confluence guide including a guide bottom portion and a guide standing portion that is connected to the guide bottom portion without a gap and extends upwards from the guide bottom portion, wherein an article conveyed by the secondary conveyance unit is pushed in a horizontal direction by the guide standing portion in a state where at least part of the article is placed on the guide bottom portion in such a manner that a whole of the article is transferred to the main conveyance path at the confluence section.

At least immediately before the confluence section, the secondary conveyance path may be arranged horizontally adjacent to the main conveyance path, and may be arranged at a same height as the main conveyance path or may be arranged higher than the main conveyance path, a timing at which an article reaches the confluence section from the secondary conveyance path may not coincide in time with a timing at which an article conveyed by the main conveyance unit reaches the confluence section, an article conveyed by the secondary conveyance unit may pass above an overlap start section of the guide bottom portion, and a near confluence section of the guide bottom portion that is positioned downstream form the overlap start section, may be arranged higher than a section of the secondary conveyance path corresponding to the near confluence section.

An article conveyed by the secondary conveyance unit may include a bag having a thin film extension portion protruding in a horizontal direction, and an article conveyed by the secondary conveyance unit may be pushed to the confluence section while the thin film extension portion is pushed by the guide standing portion.

An article conveyed by the secondary conveyance unit may start contacting the guide bottom portion at a contact start point of the guide bottom portion, and a center, in a conveyance path width direction being a horizontal direction perpendicular to a conveyance direction by the secondary conveyance unit, of an article in a state of being in contact with the guide bottom portion at the contact start point may be located closer to the guide standing portion than a center, in the conveyance path width direction, of a part of the secondary conveyance path on which the article is placed.

A size of the secondary conveyance path in a conveyance path width direction being a horizontal direction perpendicular to a conveyance direction of an article by the secondary conveyance unit, may be smaller than a size, in the conveyance path width direction, of an article conveyed by the secondary conveyance unit.

The secondary conveyance path may be positioned higher than the main conveyance path, at least immediately before the confluence section.

A conveyance speed of an article by the secondary conveyance unit may be different from a conveyance speed of an article by the main conveyance unit, and a timing at which an article conveyed by the secondary conveyance unit reaches the confluence section may not coincide in time with a timing at which an article conveyed by the main conveyance unit reaches the confluence section.

At least one of the main conveyance path and the secondary conveyance path may extend at least partially in a curve, and a conveyance distance of an article from a section of the secondary conveyance path where the article is supplied, to the confluence section may be different from a conveyance distance of an article from a section of the main conveyance path where the article is supplied, to the confluence section, and a timing at which an article conveyed by the secondary conveyance unit reaches the confluence section may not coincide in time with a timing at which an article conveyed by the main conveyance unit reaches the confluence section.

According to the present disclosure, a conveyance system that is advantageous for properly transferring an article from the secondary conveyance path to the main conveyance path can be provided.

### BRIEF DESCRIPTION OF DRAWINGS

Fig. 1 is a plan view of one example of a conveyance system;
Fig. 2 is a cross-sectional view of the conveyance system along a cross-sectional line II-II in Fig. 1;
Fig. 3 is a cross-sectional view of the conveyance system along a cross-sectional line III-III in Fig. 1;
Fig. 4 is a cross-sectional view of the conveyance system along a cross-sectional line IV-IV in Fig. 1; and
Fig. 5 is a cross-sectional view of the conveyance system along a cross-sectional line V-V of Fig. 1.

### DETAILED DESCRIPTION

One embodiment of the present disclosure is described by way of example with reference to the drawings. In the following description, the terms "upstream" and "downstream" are based on the conveyance of articles, unless otherwise stated.

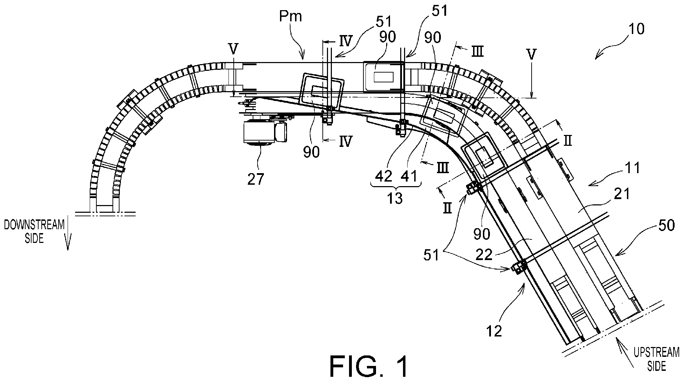

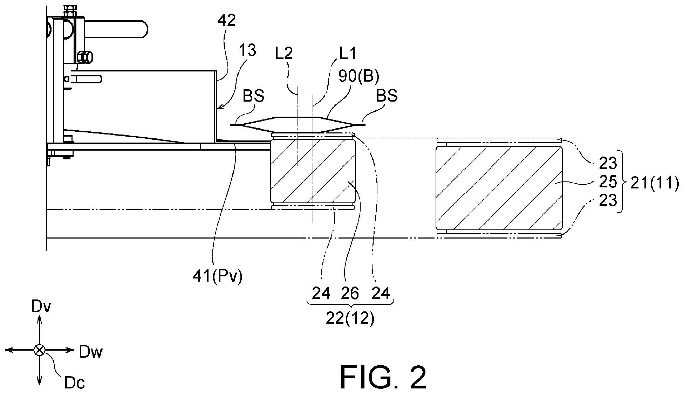

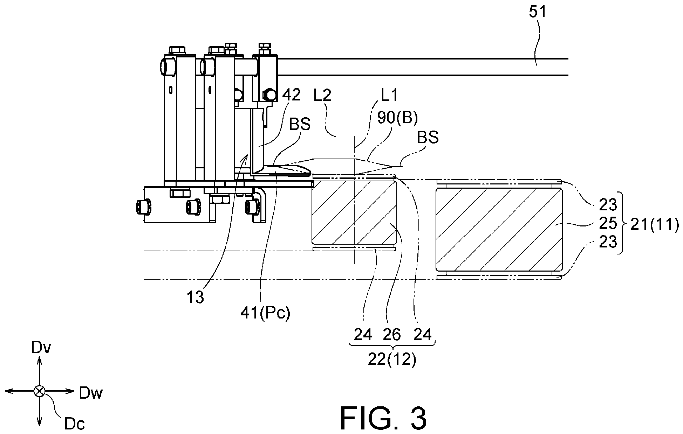

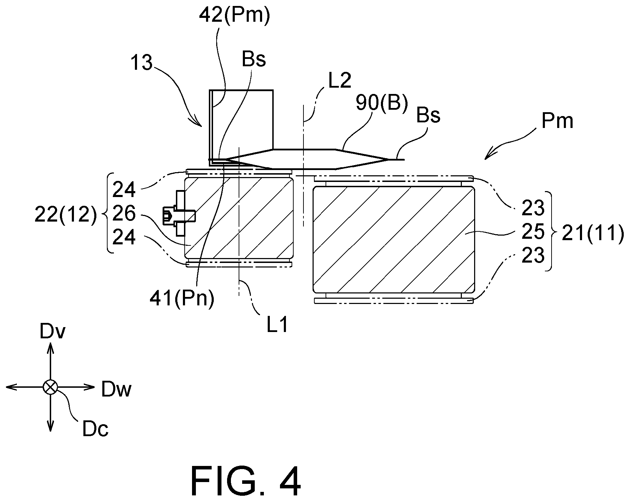

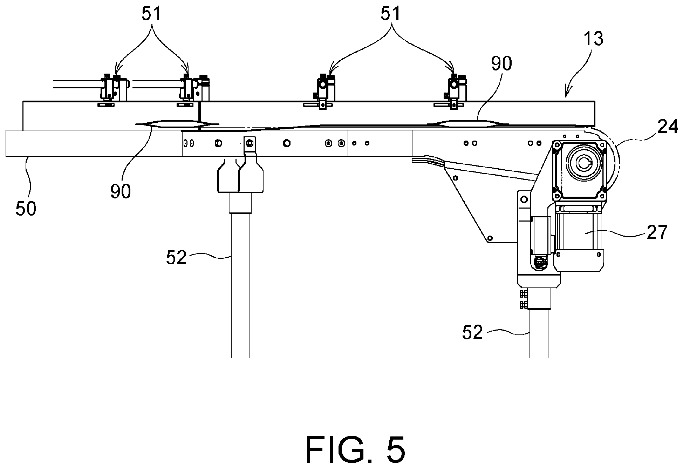

Fig. 1 is a plan view of one example of a conveyance system 10. Fig. 2 is a cross-sectional view of the conveyance system 10 along a cross-sectional line II-II in Fig. 1. Fig. 3 is a cross-sectional view of the conveyance system 10 along a cross-sectional line III-III in Fig. 1. Fig. 4 is a cross-sectional view of the conveyance system 10 along a cross-sectional line IV-IV in Fig. 1. Fig. 5 is a cross-sectional view of the conveyance system 10 along a cross-sectional line V-V of Fig. 1.

The conveyance system 10 shown in Figs. 1 to 5 comprises a main conveyance unit 11, a secondary conveyance unit 12 and a confluence guide 13.

The main conveyance unit 11 conveys articles 90 in a main conveyance path 21 including a confluence section Pm. The secondary conveyance unit 12 conveys articles 90 in a secondary conveyance path 22.

The specific form of articles 90 is not limited, and any articles can be conveyed by the main conveyance unit 11 and the secondary conveyance unit 12. The main conveyance unit 11 and the secondary conveyance unit 12 may convey the same type of articles 90 as each other or different types of articles 90 from each other.

The articles 90 shown in Figs. 1 to 5 are flat bag packaging products that each include a bag B and a content enclosed within the sealed bag B. In other words, articles 90 in the present example, which are conveyed by the main conveyance unit 11 and the secondary conveyance unit 12, each include a bag B having thin film extension portions Bs each protruding in a horizontal direction. A bag B has a rectangular planar shape, and the thin film extension portions Bs are formed by sealing (for instance, by heat-sealing) a top portion (i.e., a mouth portion), a bottom portion, and both side portions extending between the top portion and the bottom portion, which form the four sides. One side surface of each article 90 that is placed lying on the conveyance paths 21, 22 is in contact with the conveyance paths 21 and 22, while the other side surface is exposed facing upwards. The thickness (i.e., the size in the vertical direction Dv) of each article 90 in a state of being placed on the conveyance paths 21, 22 is not limited and may be, as an example, 10 mm to 25 mm.

The main conveyance unit 11 of the present embodiment sequentially conveys, towards a downstream side, a plurality of articles 90 that are arranged in a row on the main conveyance path 21. The secondary conveyance unit 12 also sequentially conveys a plurality of articles 90 downstream, towards a downstream side. Only one article 90 may be placed on the secondary conveyance path 22 at a time, or two or more articles 90 may be simultaneously placed on the secondary conveyance path 22.

As described below, articles 90 conveyed in the secondary conveyance path 22 meet articles 90 conveyed in the main conveyance path 21 at the main conveyance path 21 (in particular, at the confluence section Pm) and are then conveyed downstream in the main conveyance path 21. Articles 90 conveyed from the secondary conveyance path 22 towards the confluence section Pm are conveyed to the confluence section Pm so as to be positioned between articles 90 conveyed via the main conveyance path 21 to the confluence section Pm.

The distance (in particular, the conveyance distance) between articles 90 placed on a section of the main conveyance path 21 upstream of the confluence section Pm is equal to or larger than the conveyance direction size of an article 90 conveyed in the secondary conveyance path 22.

The conveyance structure of the main conveyance unit 11 and the secondary conveyance unit 12 is not limited. As shown in Figs. 2 to 5, the main conveyance path 21 of the present example includes: an endless main conveyor belt 23; and a main belt guide 25 that movably supports the main conveyor belt 23 from the inside. Similarly, the secondary conveyance path 22 includes: an endless secondary conveyor belt 24; and a secondary belt guide 26 that movably supports the secondary conveyor belt 24 from the inside. The main conveyor belt 23 and the secondary conveyor belt 24 are conveyed by power transmitted from a belt driving source 27 (see Fig. 1) via the main belt guide 25 and the secondary belt guide 26 respectively. Separate belt driving sources 27 may be provided for the respective main conveyor belt 23 and secondary conveyor belt 24, or both the main conveyor belt 23 and the secondary conveyor belt 24 may be conveyed by power output from a single belt driving source 27.

The main belt guide 25, the secondary belt guide 26 and the belt driving source 27 are supported by a main frame 50. The main frame 50 is fixed to an installation location (e.g., an installation stand or the ground) via frame legs 52 (see Fig. 5).

The size of the secondary conveyance path 22 (in particular, the upwardly exposed surface on which articles 90 are placed (the part of the secondary conveyor belt 24 running above the secondary belt guide 26)) in the conveyance path width direction Dw that is a horizontal direction perpendicular to the conveyance direction Dc of articles 90 by the secondary conveyance unit 12 is smaller than the size, in the conveyance path width direction Dw, of an article 90 conveyed by the secondary conveyance unit 12. This ensures the support of articles 90 by the confluence guide 13.

At least immediately before the confluence section Pm, the secondary conveyance path 22 is arranged horizontally adjacent to the main conveyance path 21 and is arranged at the same height as the main conveyance path 21 or at a higher position than the main conveyance path 21. The "main conveyance path 21 and the secondary conveyance path 22 arranged horizontally adjacent to each other" here are not required to be in close contact with each other as long as being located close to each other, and it is not required that the main conveyance path 21 and the secondary conveyance path 22 are at the same height position.

The secondary conveyance path 22 shown in Fig. 1 is arranged horizontally adjacent to the main conveyance path 21 throughout. However, the secondary conveyance path 22 does not have to be arranged horizontally adjacent to the main conveyance path 21 over the whole of the secondary conveyance path 22, and an upstream section of the secondary conveyance path 22 away from the confluence section Pm may not be arranged horizontally adjacent to the main conveyance path 21. As described above, the relative positional relation between an upstream section of the main conveyance path 21 that is away from the confluence section Pm and an upstream section of the secondary conveyance path 22 that is away from the confluence section Pm is not limited. Therefore, for example, articles 90 may be supplied to the main conveyance path 21 and the secondary conveyance path 22 from the same upstream device (i.e., an article supply device), or articles 90 may be supplied to the main conveyance path 21 and the secondary conveyance path 22 from separate upstream devices located at a distance respectively.

The confluence guide 13 includes: a guide bottom portion 41 extending in a horizontal direction; and a guide standing portion 42 that is connected to the guide bottom portion 41 without a gap and extends upwards from the guide bottom portion 41. The guide bottom portion 41 supports articles 90 from below. A plurality of confluence guide attachment members 51 are attached to the guide standing portion 42. The confluence guide 13 is fixedly supported by the main frame 50 via the plurality of confluence guide attachment members 51.

Regarding the confluence guide 13 shown in Figs. 2 to 4, the direction of extension of the guide bottom portion 41 corresponds to the horizontal direction, the direction of extension of the guide standing portion 42 corresponds to the vertical direction, and the angle formed by the guide bottom portion 41 and the guide standing portion 42 is 90°. However, the direction of extension of the guide bottom portion 41 does not have to coincide with the horizontal direction, and at least part of the guide bottom portion 41 may extend in a direction that is oblique to the horizontal direction. In a case where at least part of the guide bottom portion 41 extends in a direction that is oblique to the horizontal direction, it is preferred, from the viewpoint of reducing the catching of an article 90 against the guide bottom portion 41, that said at least part of the guide bottom portion 41 extends in a direction that is downwardly oblique with respect to the horizontal direction. Also, the direction of extension of the guide standing portion 42 may not coincide with the vertical direction, and at least part of the guide standing portion 42 may extend in a direction that is oblique to the vertical direction.

Further, the angle formed by the guide bottom portion 41 and the guide standing portion 42 is not limited but is preferably between 60° and 120°. From the viewpoint of reducing the catching of articles 90 against the confluence guide 13, it is preferred that the angle formed by the guide bottom portion 41 and the guide standing portion 42 is 60° or more. On the other hand, from the viewpoint of ensuring proper guiding of articles 90 by the confluence guide 13 (in particular, the guide standing portion 42), it is preferred that the angle formed by the guide bottom portion 41 and the guide standing portion 42 is 120° or less.

An article 90 conveyed by the secondary conveyance unit 12 is pushed in a horizontal direction by the guide standing portion 42 while at least part of said article 90 is placed on the guide bottom portion 41, so that the whole of said article 90 is transferred to the main conveyance path 21 at the confluence section Pm.

In particular, in the example shown in Figs. 1 to 5, an article 90 conveyed by the secondary conveyance unit 12 is pushed to the confluence section Pm while a thin film extension portion Bs of the bag B is pushed by the guide standing portion 42 with the guide standing portion 42 contacting the thin film extension portion Bs.

The confluence guide 13 (i.e., the guide bottom portion 41 and the guide standing portion 42) shown in Fig. 1 extends obliquely across above the secondary conveyance path 22 so as to gradually approach the main conveyance path 21 at least in the vicinity of the confluence section Pm.

The timing when articles 90 reach the confluence section Pm from the secondary conveyance path 22 does not coincide in time with the timing when articles 90 conveyed by the main conveyance unit 11 reach the confluence section Pm. The timing of articles 90 reaching the confluence section Pm can be adjusted in any way. For example, it is possible to adjust the timing of articles 90 reaching the confluence section Pm based on a difference in the conveyance speed and/or a difference in the conveyance distance of articles 90 between the main conveyance path 21 and the secondary conveyance path 22.

Specifically, by making the conveyance speed of articles 90 by the secondary conveyance unit 12 different from the conveyance speed of articles 90 by the main conveyance unit 11, the timing at which the articles 90 conveyed by the secondary conveyance unit 12 reach the confluence section Pm may be adjusted to not coincide in time with the timing at which the articles 90 conveyed by the main conveyance unit 11 reach the confluence section Pm. In this case, the conveyance speed of the articles 90 by the secondary conveyance unit 12 may be slower or faster than the conveyance speed of the articles 90 by the main conveyance unit 11, and in some cases, it is preferred that the conveyance speed of the articles 90 by the main conveyance unit 11 is faster than the conveyance speed of the articles 90 by the secondary conveyance unit 12.

Further, at least one of the main conveyance path 21 and the secondary conveyance path 22 may extend at least partially in a curve (e.g., in a circular arc). In this case, it is easy to make the conveyance distance of articles 90 from the section of the secondary conveyance path 22 where the articles 90 are supplied, to the confluence section Pm different from the conveyance distance of articles 90 from the section of the main conveyance path 21 where the articles 90 are supplied, to the confluence section Pm. In this case, too, the timing at which the articles 90 conveyed by the secondary conveyance unit 12 reach the confluence section Pm may be shifted from the timing at which the articles 90 conveyed by the main conveyance unit 11 reach the confluence section Pm.

In the example shown in Fig. 1, both the main conveyance path 21 and the secondary conveyance path 22 include curved conveyance path sections, and there is a difference in the conveyance distance of an article 90 between the main conveyance path 21 and the secondary conveyance path 22. However, there may not be a difference in the conveyance distance of an article 90 between the main conveyance path 21 and the secondary conveyance path 22. For example, the main conveyance path 21 and secondary conveyance path 22 may not include a curved conveyance path section but may include only a straight path, and the conveyance distance of an article 90 from the section of the secondary conveyance path 22 where the article 90 is supplied, to the confluence section Pm may be the almost the same as the conveyance distance of an article 90 from the section of the main conveyance path 21 where the article 90 is supplied, to the confluence section Pm. In such a case, it is effective to adjust the timing at which articles 90 reach the confluence section Pm based on the difference in the conveyance speed of the articles 90 between the main conveyance path 21 and the secondary conveyance path 22.

The timing at which articles 90 reach the confluence section Pm may be adjusted based on only one of the difference in the conveyance speed and the difference in the conveyance distance of articles 90 between the main conveyance path 21 and the secondary conveyance path 22, or the timing at which articles 90 reach the confluence section Pm may be adjusted based on both the difference in the conveyance speed and the difference in the conveyance distance. The timing at which articles 90 reach the confluence section Pm may also be adjusted, between the main conveyance path 21 and the secondary conveyance path 22, based on other adjustment factors. For example, instead of or in addition to the difference in the conveyance speed and/or the difference in the conveyance distance, by adjusting the positions of the sections where articles 90 are supplied between the main conveyance path 21 and the secondary conveyance path 22, the conveyance distance of the articles 90 from the section where the articles 90 are supplied, to the confluence section Pm may be changed between the main conveyance path 21 and the secondary conveyance path 22.

Articles 90 conveyed by the secondary conveyance unit 12 pass above the overlap start section Pv (see Fig. 2) of the guide bottom portion 41. By lowering the overlap start section Pv of the guide bottom portion 41 (in particular, the upper exposed surface) below articles 90 conveyed by the secondary conveyance unit 12 and the secondary conveyance path 22 (in particular, the upper exposed surface (an article support surface), which is a conveyance surface of the secondary conveyor belt 24 on which the articles 90 are directly placed), it is advantageous that the articles 90 are smoothly placed on the guide bottom portion 41 without getting caught on the guide bottom portion 41.

Articles 90 conveyed by the secondary conveyance unit 12 start contacting the guide bottom portion 41 at the contact start point Pc (see Fig. 3) of the guide bottom portion 41 that is located downstream from the overlap start section Pv.

The center, in the conveyance path width direction Dw being a horizontal direction perpendicular to the conveyance direction Dc by the secondary conveyance unit 12, of an article 90 being in a state of contacting with the guide bottom portion 41 at the contact start point Pc, is positioned closer to the guide standing portion 42 than the center, in the conveyance path width direction Dw, of the part of the secondary conveyance path 22 on which the article 90 is placed. In other words, at the contact start point Pc, the center, in the conveyance path width direction Dw, of an article 90 conveyed by the secondary conveyance unit 12 differs in position in a horizontal direction, from the center, in the conveyance path width direction Dw, of the secondary conveyance path 22 (in particular, of the upper exposed surface of the secondary conveyor belt 24) towards the guide standing portion 42 side (i.e., towards the opposite side from the main conveyance path 21). This makes it possible to surely perform the support of an article 90 by the confluence guide 13 and the pushing of articles 90 to the confluence section Pm.

In Figs. 2 to 4, reference numeral "L1" denotes a secondary conveyance path width center line that is a vertical line passing through the center, in the conveyance path width direction Dw, of the secondary conveyance path 22 (in particular, the upwardly exposed surface on which articles 90 are placed (the part of the secondary conveyor belt 24 running above the secondary belt guide 26)). Further, reference numeral "L2" denotes an article width center line that is a vertical line passing through the center, in the conveyance path width direction Dw, of the article 90 conveyed in the secondary conveyance path 22.

A confluence vicinity section Pn (see Fig. 4) of the guide bottom portion 41 that is located downstream from the overlap start section Pv and the contact start point Pc, is located higher than the section of the secondary conveyance path 22 corresponding to the confluence vicinity section Pn and is located higher than the confluence section Pm of the main conveyance path 21. The confluence vicinity section Pn is a section corresponding to the confluence section Pm of the main conveyance path 21 (i.e., a section in the range corresponding to the confluence section Pm with respect to the conveyance path width direction Dw of the main conveyance path 21). In the present example, as described above, the confluence guide 13 extends across above the secondary conveyance path 22, and the "confluence vicinity section Pn of the guide bottom portion 41" is located above a "section of the secondary conveyance path 22 corresponding to the confluence vicinity section Pn".

Before and after the confluence vicinity section Pn of the guide bottom portion 41, the guide standing portion 42 gradually approaches the confluence section Pm of the main conveyance path 21 towards the downstream side. As a result, an article 90 that is sent via the secondary conveyance path 22 and is then placed on the guide bottom portion 41, receives a force, from the guide standing portion 42, acting towards the confluence section Pm of the main conveyance path 21, and finally, the article 90 can be reliably transferred from the secondary conveyance path 22 towards the confluence section Pm of the main conveyance path 21.

The distance in the vertical direction Dv (i.e., the height direction distance) between the confluence section Pm of the main conveyance path 21, and the confluence vicinity section Pn of the guide bottom portion 41 and the section of the secondary conveyance path 22 corresponding to the confluence vicinity section Pn is not limited, and may be, for example, approximately 5 mm.

In this manner, the height position of the guide bottom portion 41 of the confluence guide 13 is not constant, and the guide bottom portion 41 has different heights at the overlap start section Pv (see the cross-sectional line II-II in Fig. 1), the contact start point Pc (see the cross-sectional line III-III in Fig. 1) and the confluence vicinity section Pn (see the cross-sectional line IV-IV in Fig. 1). More specifically, the guide bottom portion 41 of the present example is continuously inclined upwards from an intermediate section between the overlap start section Pv and the contact start point Pc to the confluence vicinity section Pn.

According to the conveyance system 10 of the above-described present embodiment, for example, articles (flat bag package products) 90 released from the same height position in two rows from a packaging machine can be placed on the main conveyance path 21 and the secondary conveyance path 22, respectively.

Two articles 90 placed on the main conveyance path 21 and the secondary conveyance path 22 are conveyed downstream by the main conveyance path 21 and the secondary conveyance path 22.

Before an article enters the confluence section Pm, the bottom surface of one side portion (e.g., a side seal portion) of the article 90 being conveyed in the secondary conveyance path 22 is supported by the guide bottom portion 41 of the confluence guide 13.

Then, an article 90 is conveyed downstream in a state where the bottom surface of one side portion of the article 90 conveyed in the secondary conveyance path 22 is supported by the guide bottom portion 41, and the article 90 is subjected to a horizontal force from the guide standing portion 42 while the guide standing portion 42 of the confluence guide 13 contacts the one side portion, resulting in the article 90 being gradually moved from the secondary conveyance path 22 to the main conveyance path 21 (in particular, to the confluence section Pm). Such meeting of articles 90 is achieved as a consequence of the fact that articles 90 from the secondary conveyance path 22 enter spaces between articles 90 conveyed by the main conveyance unit 11.

Then, articles 90 having come together at the confluence section Pm are conveyed further downstream by the main conveyance unit 11 while being aligned in a single row in the main conveyance path 21.

Each article 90 conveyed in this manner by the secondary conveyance unit 12 from the secondary conveyance path 22 towards the confluence section Pm is conveyed downstream by only the secondary conveyance path 22 (in particular, the secondary conveyor belt 24) immediately after being placed on the secondary conveyance path 22 (at the most upstream point). Thereafter, each article 90 may partially ride up onto the main conveyance path 21, and in such a case, each article 90 is conveyed downstream by receiving force not only from the secondary conveyance path 22 but also from the main conveyance path 21 (in particular, the main conveyor belt 23). Thereafter, each article 90 is conveyed downstream mainly by inertial forces immediately before reaching the confluence section Pm and consequently enters the confluence section Pm. Each article 90 may be subject to a downstream conveying force from the main conveyance path 21 and/or the secondary conveyance path 22 immediately before reaching the confluence section Pm.

As explained above, according to the conveyance system 10 of the present embodiment, the confluence guide 13 that guides articles 90 from the secondary conveyance path 22 to the confluence section Pm of the main conveyance path 21 has the guide bottom portion 41 and the guide standing portion 42 that are connected to each other without gaps. Thus, articles 90 are properly transferred from the secondary conveyance path 22 to the main conveyance path 21 without entering a "gap between the guide bottom portion 41 and the guide standing portion 42".

Accordingly, according to the conveyance system 10 of the present embodiment, articles 90 can be transferred from the secondary conveyance path 22 to the main conveyance path 21 in an appropriate posture, it can be effectively avoided that articles 90 receive scratches or other damages from the confluence guide 13, and the sequential and smooth conveyance of the articles 90 in the secondary conveyance path 22 can be realized while the jam of articles 90 in the secondary conveyance path 22 can be avoided.

### [Modified examples]

A stopper may be provided to perform a stop (a stopper-on) and a permission (a stopper-off) of the conveyance of articles 90 towards the downstream side in the main conveyance path 21 and/or the secondary conveyance path 22. For example, the conveyance state (e.g., the conveyance position) of an article 90 in the main conveyance path 21 and the secondary conveyance path 22 may be detected by a sensor, and the control unit may perform on-off control of the stopper based on the detection results of the sensor. If the control unit determines, from the detection results of the sensor, that there is a possibility that an article 90 conveyed by the main conveyance unit 11 and an article 90 conveyed by the secondary conveyance unit 12 collide with each other at the confluence section Pm, the control unit may cause the stopper to temporarily stop the conveyance of an article(s) 90 towards the downstream side, at the upstream side from the confluence section Pm, in the main conveyance path 21 or the secondary conveyance path 22. Thereafter, the control unit places the stopper in a stopper-off state at a timing when articles 90 do not collide with each other at the confluence section Pm, so that an article 90 which has been temporarily stopped from being conveyed downstream is conveyed towards the confluence section Pm.

Articles 90 conveyed in the above-mentioned embodiment each include a bag B having a sealed top portion, a sealed bottom portion and both sealed side portions, but may instead each include another bag such as a self-supporting/self-standing bag. A self-supporting/self-standing bag here means a bag that can stand on its own, and for example, a self-supporting/self-standing bag may include a bottom portion having a folded structure. Further, articles 90 including bags B are conveyed in the embodiments described above, the conveyance system 10 may also convey articles 90 that each include a container other than a bag.

## Claims

1. A conveyance system (10) comprising:
a main conveyance unit (11) that conveys an article (90) in a main conveyance path (21) including a confluence section (Pm);
a secondary conveyance unit (12) that conveys an article (90) in a secondary conveyance path (22); and
a confluence guide (13) that includes a guide bottom portion (41) and extends obliquely across above the secondary conveyance path (22) in such a manner that the confluence guide (13) gradually approaches the main conveyance path (21),
**characterized in that**
the confluence guide (13) further includes a guide standing portion (42) that extends obliquely across above the secondary conveyance path (22) so as to gradually approach the main conveyance path (21), wherein the guide standing portion (42) is connected to the guide bottom portion (41) without a gap and extends upwards from the guide bottom portion (41), wherein an article (90) conveyed by the secondary conveyance unit (12) is pushed in a horizontal direction by the guide standing portion (42) in a state where at least part of the article (90) is placed on the guide bottom portion (41) in such a manner that a whole of the article (90) is transferred to the main conveyance path (21) at the confluence section (Pm).

2. The conveyance system (10) as defined in claim 1,
wherein an article (90) conveyed by the secondary conveyance unit (12) includes a bag having a thin film extension portion (Bs) protruding in a horizontal direction, and
wherein an article (90) conveyed by the secondary conveyance unit (12) is pushed to the confluence section (Pm) while the thin film extension portion (Bs) is pushed by the guide standing portion (42).

3. The conveyance system (10) as defined in claim 1 or 2,
wherein an article (90) conveyed by the secondary conveyance unit (12) starts contacting the guide bottom portion (41) at a contact start point (Pc) of the guide bottom portion (41), and
wherein a center, in a conveyance path width direction (Dw) being a horizontal direction perpendicular to a conveyance direction by the secondary conveyance unit (12), of an article (90) in a state of being in contact with the guide bottom portion (41) at the contact start point (Pc) is located closer to the guide standing portion (42) than a center, in the conveyance path width direction (Dw), of a part of the secondary conveyance path (22) on which the article (90) is placed.

4. The conveyance system (10) as defined in any one of claims 1 to 3, wherein a size of the secondary conveyance path (22) in a conveyance path width direction (Dw) being a horizontal direction perpendicular to a conveyance direction (Dc) of an article (90) by the secondary conveyance unit (12), is smaller than a size, in the conveyance path width direction (Dw), of an article (90) conveyed by the secondary conveyance unit (12).

5. The conveyance system (10) as defined in any one of claims 1 to 4, wherein the secondary conveyance path (22) is positioned higher than the main conveyance path (21), at least immediately before the confluence section (Pm).

6. The conveyance system (10) as defined in any one of claims 1 to 5,
wherein at least immediately before the confluence section (Pm), the secondary conveyance path (22) is arranged horizontally adjacent to the main conveyance path (21), and is arranged at a same height as the main conveyance path (21) or is arranged higher than the main conveyance path (21),
wherein a timing at which an article (90) reaches the confluence section (Pm) from the secondary conveyance path (22) does not coincide in time with a timing at which an article (90) conveyed by the main conveyance unit (11) reaches the confluence section (Pm),
wherein an article (90) conveyed by the secondary conveyance unit (12) passes above an overlap start section (Pv) of the guide bottom portion (41), and
wherein a near confluence section (Pn) of the guide bottom portion (41) that is positioned downstream form the overlap start section (Pv), is arranged higher than a section of the secondary conveyance path (22) corresponding to the near confluence section (Pn).

7. The conveyance system (10) as defined in any one of claims 1 to 5, wherein a conveyance speed of an article (90) by the secondary conveyance unit (12) is different from a conveyance speed of an article (90) by the main conveyance unit (11), and a timing at which an article (90) conveyed by the secondary conveyance unit (12) reaches the confluence section (Pm) does not coincide in time with a timing at which an article (90) conveyed by the main conveyance unit (11) reaches the confluence section (Pm).

8. The conveyance system (10) as defined in any one of claims 1 to 5 and 7,
wherein at least one of the main conveyance path (21) and the secondary conveyance path (22) extends at least partially in a curve, and
wherein a conveyance distance of an article (90) from a section of the secondary conveyance path (22) where the article (90) is supplied, to the confluence section (Pm) is different from a conveyance distance of an article (90) from a section of the main conveyance path (21) where the article (90) is supplied, to the confluence section (Pm), and a timing at which an article (90) conveyed by the secondary conveyance unit (12) reaches the confluence section (Pm) does not coincide in time with a timing at which an article (90) conveyed by the main conveyance unit (11) reaches the confluence section (Pm).

## Patentansprüche

1. Fördersystem (10), umfassend:
eine Hauptfördereinheit (11), die einen Gegenstand (90) in einem Hauptförderweg (21) befördert, der einen Zusammenflussabschnitt (Pm) umfasst;
eine Nebenfördereinheit (12), die einen Gegenstand (90) in einem Nebenförderweg (22) fördert; und
eine Zusammenflussführung (13), die einen Führungsbodenabschnitt (41) umfasst und sich schräg über den Nebenförderweg (22) erstreckt, und zwar derart, dass sich die Zusammenflussführung (13) allmählich dem Hauptförderweg (21) nähert,
**dadurch gekennzeichnet, dass**
die Zusammenflussführung (13) ferner einen Führungsstehabschnitt (42) umfasst, der sich schräg über den Nebenförderweg (22) erstreckt, um sich allmählich dem Hauptförderweg (21) anzunähern, wobei der Führungsstehabschnitt (42) lückenlos mit dem Führungsbodenabschnitt (41) verbunden ist und sich von diesem nach oben erstreckt, wobei ein Gegenstand (90), der von der Nebenfördereinheit (12) befördert wird, durch den Führungsstehabschnitt (42) in horizontaler Richtung geschoben wird, während sich zumindest ein Teil des Gegenstands (90) auf dem Führungsbodenabschnitt (41) befindet, und zwar derart, dass der gesamte Gegenstand (90) an dem Zusammenflussabschnitt (Pm) auf den Hauptförderweg (21) übergeben wird.

2. Das Fördersystem (10) gemäß Anspruch 1, wobei
ein von der Nebenfördereinheit (12) geförderter Gegenstand (90) einen Beutel mit einem in horizontaler Richtung vorstehenden dünnen Folienfortsatzabschnitt (Bs) umfasst, und wobei
ein von der Nebenfördereinheit (12) geförderter Gegenstand (90) zum Zusammenflussabschnitt (Pm) geschoben wird, während der dünne Folienfortsatzabschnitt (Bs) durch den Führungsstehabschnitt (42) geschoben wird.

3. Das Fördersystem (10) gemäß Anspruch 1 oder 2, wobei
ein von der Nebenfördereinheit (12) geförderter Gegenstand (90) an einem Kontaktstartpunkt (Pc) des Führungsbodenabschnitts (41) mit dem Führungsbodenabschnitt (41) in Kontakt kommt, und wobei
eine Mitte eines Gegenstands (90) in einer Förderbahnbreitenrichtung (Dw), die eine horizontale Richtung senkrecht zur Förderrichtung der Nebenfördereinheit (12) darstellt, in einem Zustand, in dem er am Kontaktstartpunkt (Pc) mit dem Führungsbodenabschnitt (41) in Kontakt steht, näher am Führungsstehabschnitt (42) liegt als eine Mitte in der Förderbahnbreitenrichtung (Dw) eines Teils des Nebenförderwegs (22), auf dem der Gegenstand (90) platziert ist.

4. Das Fördersystem (10) gemäß einem der Ansprüche 1 bis 3, wobei
eine Größe der Nebenfördereinheit (12) in einer Förderbahnbreitenrichtung (Dw), die eine horizontale Richtung senkrecht zu einer Förderrichtung (Dc) eines Gegenstands (90) durch die Nebenfördereinheit (12) darstellt, kleiner ist als eine Größe in der Förderbahnbreitenrichtung (Dw) eines von der Nebenfördereinheit (12) geförderten Gegenstands (90) ist.

5. Das Fördersystem (10) gemäß einem der Ansprüche 1 bis 4, wobei
der Nebenförderweg (22) zumindest unmittelbar vor dem Zusammenflussabschnitt (Pm) höher als der Hauptförderweg (21) angeordnet ist.

6. Das Fördersystem (10) gemäß einem der Ansprüche 1 bis 5, wobei
zumindest unmittelbar vor dem Zusammenflussabschnitt (Pm) der Nebenförderweg (22) horizontal neben dem Hauptförderweg (21) angeordnet ist und auf derselben Höhe wie der Hauptförderweg (21) oder höher als der Hauptförderweg (21) angeordnet ist, wobei
der Zeitpunkt, zu dem ein Gegenstand (90) von dem Nebenförderweg (22) aus den Zusammenflussabschnitt (Pm) erreicht, zeitlich nicht mit dem Zeitpunkt zusammenfällt, zu dem ein von der Hauptfördereinheit (11) geförderter Gegenstand (90) den Zusammenflussabschnitt (Pm) erreicht, wobei
ein von der Nebenfördereinheit (12) geförderter Gegenstand (90) über einen Überlappungsanfangsabschnitt (Pv) des Führungsbodenabschnitts (41) hinwegläuft, und wobei
ein dem Überlappungsanfangsabschnitt (Pv) nachgelagerter naher Zusammenflussabschnitt (Pn) des Führungsbodenabschnitts (41) höher angeordnet ist als ein dem nahen Zusammenflussabschnitt (Pn) entsprechender Abschnitt des Nebenförderwegs (22).

7. Das Fördersystem (10) gemäß einem der Ansprüche 1 bis 5, wobei
sich eine Fördergeschwindigkeit eines Gegenstands (90) durch die Nebenfördereinheit (12) von einer Fördergeschwindigkeit eines Gegenstands (90) durch die Hauptfördereinheit (11) unterscheidet, und der Zeitpunkt, zu dem ein von der Nebenfördereinheit (12) geförderter Gegenstand (90) den Zusammenflussabschnitt (Pm) erreicht, zeitlich nicht mit dem Zeitpunkt übereinstimmt, zu dem ein von der Hauptfördereinheit (11) geförderter Gegenstand (90) den Zusammenflussabschnitt (Pm) erreicht.

8. Das Fördersystem (10) gemäß einem der Ansprüche 1 bis 5 und 7, wobei
sich zumindest einer des Hauptförderwegs (21) und des Nebenförderwegs (22) zumindest teilweise in einer Kurve erstreckt, und wobei
sich eine Förderdistanz eines Gegenstands (90) von einem Abschnitt des Nebenförderwegs (22), an dem der Gegenstand (90) zugeführt wird, bis zum Zusammenflussabschnitt (Pm) von einer Förderdistanz eines Gegenstands (90) von einem Abschnitt der Hauptförderweg (21), an dem der Gegenstand (90) zugeführt wird, bis zum Zusammenflussabschnitt (Pm) unterscheidet, und ein Zeitpunkt, zu dem ein von der Nebenfördereinheit (12) geförderter Gegenstand (90) den Zusammenflussabschnitt (Pm) erreicht, zeitlich nicht mit einem Zeitpunkt zusammenfällt, zu dem ein von der Hauptfördereinheit (11) geförderter Gegenstand (90) den Zusammenflussabschnitt (Pm) erreicht.

## Revendications

1. Système de transport (10) comprenant :
une unité de transport principale (11) qui transporte un article (90) dans une voie de transport principale (21) comportant une section de confluence (Pm) ;
une unité de transport secondaire (12) qui transporte un article (90) dans une voie de transport secondaire (22) ; et
un guide de confluence (13) qui comporte une portion inférieure de guide (41) et s'étend obliquement au-dessus de la voie de transport secondaire (22) de manière à ce que le guide de confluence (13) s'approche progressivement de la voie de transport principale (21),
**caractérisé en ce que**
le guide de confluence (13) comporte en outre une portion verticale de guide (42) qui s'étend obliquement au-dessus de la voie de transport secondaire (22) de manière à approcher progressivement la voie de transport principale (21), dans lequel la portion verticale de guide (42) est reliée à la portion inférieure de guide (41) sans espace et s'étend vers le haut à partir de la portion inférieure de guide (41), dans lequel un article (90) transporté par l'unité de transport secondaire (12) est poussé dans une direction horizontale par la portion verticale de guide (42) dans un état où au moins une partie de l'article (90) est placée sur la portion inférieure de guide (41) de manière à ce qu'une intégralité de l'article (90) soit transférée sur la voie de transport principale (21) au niveau de la section de confluence (Pm).

2. Système de transport (10) selon la revendication 1,
dans lequel un article (90) transporté par l'unité de transport secondaire (12) comporte un sac présentant une portion d'extension de film mince (Bs) faisant saillie dans une direction horizontale, et
dans lequel un article (90) transporté par l'unité de transport secondaire (12) est poussé vers la section de confluence (Pm) tandis que la portion d'extension de film mince (Bs) est poussée par la portion verticale de guide (42).

3. Système de transport (10) selon la revendication 1 ou 2,
dans lequel un article (90) transporté par l'unité de transport secondaire (12) commence à entrer en contact avec la portion inférieure de guide (41) au niveau d'un point de départ de contact (Pc) de la portion inférieure de guide (41), et
dans lequel un centre, dans une direction de largeur de voie de transport (Dw) à savoir une direction horizontale perpendiculaire à une direction de transport par l'unité de transport secondaire (12), d'un article (90) dans un état de contact avec la portion inférieure de guide (41) au point de départ de contact (Pc) est situé plus près de la portion verticale de guide (42) qu'un centre, dans la direction de largeur de voie de transport (Dw), d'une partie de la voie de transport secondaire (22) sur laquelle l'article (90) est placé.

4. Système de transport (10) selon l'une quelconque des revendications 1 à 3, dans lequel une taille de la voie de transport secondaire (22) dans une direction de largeur de voie de transport (Dw) à savoir une direction horizontale perpendiculaire à une direction de transport (Dc) d'un article (90) par l'unité de transport secondaire (12) est inférieure à une taille, dans la direction de largeur de voie de transport (Dw), d'un article (90) transporté par l'unité de transport secondaire (12).

5. Système de transport (10) selon l'une quelconque des revendications 1 à 4, dans lequel la voie de transport secondaire (22) est positionnée plus haut que la voie de transport principale (21), au moins immédiatement avant la section de confluence (Pm).

6. Système de transport (10) selon l'une quelconque des revendications 1 à 5,
dans lequel au moins immédiatement avant la section de confluence (Pm), la voie de transport secondaire (22) est agencée horizontalement adjacente à la voie de transport principale (21), et est agencée à une même hauteur que la voie de transport principale (21) ou est agencée plus haut que la voie de transport principale (21),
dans lequel un moment auquel un article (90) atteint la section de confluence (Pm) à partir de la voie de transport secondaire (22) ne coïncide pas dans le temps avec un moment auquel un article (90) transporté par l'unité de transport principale (11) atteint la section de confluence (Pm),
dans lequel un article (90) transporté par l'unité de transport secondaire (12) passe au-dessus d'une section de début de chevauchement (Pv) de la portion inférieure de guide (41), et
dans lequel une section de confluence proche (Pn) de la portion inférieure de guide (41) qui est positionnée en aval de la section de début de chevauchement (Pv) est agencée plus haut qu'une section de la voie de transport secondaire (22) correspondant à la section de confluence proche (Pn).

7. Système de transport (10) selon l'une quelconque des revendications 1 à 5, dans lequel une vitesse de transport d'un article (90) par l'unité de transport secondaire (12) est différente d'une vitesse de transport d'un article (90) par l'unité de transport principale (11), et un moment auquel un article (90) transporté par l'unité de transport secondaire (12) atteint la section de confluence (Pm) ne coïncide pas dans le temps avec un moment auquel un article (90) transporté par l'unité de transport principale (11) atteint la section de confluence (Pm).

8. Système de transport (10) selon l'une quelconque des revendications 1 à 5 et 7,
dans lequel au moins l'une de la voie de transport principale (21) et de la voie de transport secondaire (22) s'étend au moins partiellement en une courbe, et
dans lequel une distance de transport d'un article (90) à partir d'une section de la voie de transport secondaire (22) où l'article (90) est fourni vers la section de confluence (Pm) est différente d'une distance de transport d'un article (90) à partir d'une section de la voie de transport principale (21) où l'article (90) est fourni vers la section de confluence (Pm), et un moment auquel un article (90) transporté par l'unité de transport secondaire (12) atteint la section de confluence (Pm) ne coïncide pas dans le temps avec un moment auquel un article (90) transporté par l'unité de transport principale (11) atteint la section de confluence (Pm).
